# EUROPÄISCHE PATENTSCHRIFT

(11) **EP 2 068 056 B1**
(45) Veröffentlichungstag und Bekanntmachung des Hinweises auf die Patenterteilung: **04.08.2010**
(21) Anmeldenummer: 07023808.4
(22) Anmeldetag: 08.12.2007
(51) Int. Cl.: F16K 31/06

(54) **Vorrichtung zur Durchflussregelung eines flüssigen oder gasförmigen Mediums**
Device for regulating the flow of a fluid or gaseous medium
Dispositif destiné à la régulation du débit d'un milieu liquide ou gazeux

(43) Veröffentlichungstag der Anmeldung: 10.06.2009
(73) Patentinhaber: Asco Joucomatic GmbH, 75248 Ölbronn-Dürrn (DE)
(72) Erfinder: Ams, Felix, 75236 Kämpfelbach (DE); Metternich de Oliveira, Peter, 75249 Kieselbronn (DE)
(74) Vertreter: Kratzsch, Volkhard

(56) Entgegenhaltungen:
- EP-A- 1 045 150
- DE-U- 7 324 333
- US-A- 3 683 962

## Beschreibung

Die Erfindung betrifft eine Vorrichtung zur Durchflussregelung eines flüssigen oder gasförmigen Mediums der im Oberbegriff des Anspruchs 1 genannten Art.

Eine bekannte Vorrichtung zur Regelung eines Mediums (EP 1 536 169 A1) weist ein Ventilgehäuse mit einem Ventileinlass und einem Ventilauslass sowie mit einer zwischen Ventileinlass und Ventilauslass angeordneten Ventilöffnung auf, die von einem Ventilsitz umgeben ist. Ventilöffnung und Ventilsitz sind in einer Ventilkammer angeordnet. Der Ventilsitz arbeitet zum Öffnen und Schließen der Ventilöffnung mit einem Ventilglied zusammen, das an der Stirnseite eines in die Ventilkammer hineinragenden Ankers eines Elektromagneten befestigt ist. Der Anker ist in einer Führungshülse axial verschieblich geführt, die ihrerseits in die Ventilkammer eingesetzt und in dieser gegen die Kammerwand abgedichtet ist. In einem Sackloch des Ankers ist eine Ventilschließfeder angeordnet, die sich einerseits am Anker und andererseits an einem von außen zugänglichem Justierstift abstützt und bei unerregtem Elektromagneten über den Anker das Ventilglied auf den Ventilsitz aufpresst. Bei Bestromung des Elektromagneten wird der Anker gegen die Federkraft der Ventilschließfeder axial verschoben, und der Anker hebt das Ventilglied hebt vom Ventilsitz ab, wodurch die Ventilöffnung freigegeben ist und je nach Hub des Ventilglieds eine größere oder kleinere Mediummenge vom Ventileinlass über die Ventilkammer zum Ventilauslass strömt. Die Ventilkammer ist ständig mit Medium gefüllt, so dass das Ventilglied und das Stirnende des Ankers stets vom Medium umspült ist.

Der Erfindung liegt die Aufgabe zugrunde, eine Vorrichtung zur Durchflussregelung eines flüssigen oder gasförmigen Mediums der eingangs genannten Art anzugeben, die bei strikter Trennung der Betätigungsvorrichtung für das den Mediumfluss steuernde Ventilglied vom Medium robust ist und eine hohe Standzeit besitzt.

Die Aufgabe ist erfindungsgemäß durch die Merkmale im Anspruch 1 gelöst.

Die erfindungsgemäße Vorrichtung hat den Vorteil eines konstruktiv stabilen Ventilglieds, bei dem durch die Unterteilung in einen vom Medium umspülten Schließkörper und einen vom Medium getrennten Rahmen zur Betätigung des Schließkörpers die am Rahmen angreifende Betätigungsvorrichtung zum Einstellen der Größe des Mediumstroms nicht mit dem Mediumstrom in Berührung kommt. Die Vorrichtung kann somit auch mit hohen Standzeiten für die Durchflussregelung von aggressiven gasförmigen oder flüssigen Medien eingesetzt werden. Das Ventilglied lässt sich kostengünstig fertigen, insbesondere dann, wenn gemäß einer bevorzugten Ausführungsform der Erfindung der Rahmen und der Träger des Schließkörpers sowie die Rahmen und Träger verbindenden Stege als einteiliger Stanzschnitt aus einem Metallblech gefertigt werden und die dem Medium ausgesetzten Bereiche des Ventilglieds, also der Träger, mit einem Überzug, z. B. aus Kunststoff, Gummi, einem Elastomer od. dgl., abgedeckt werden.

Weitere besondere Erfindungsmerkmale sowie Ausgestaltungen des Erfindungsgegenstandes ergeben sich aus den weiteren Ansprüchen und der nachfolgenden Beschreibung.

Gemäß einer vorteilhaften Ausführungsform der Erfindung sind im Ventilgehäuse ein weiterer Ventileinlass und eine von einem weiteren Ventilsitz umgebene weitere Ventilöffnung vorgesehen. Auf dem Überzug des Schließkörpers sind im Querabstand von Stegen zwei mit den beiden Ventilsitzen zusammenwirkende Dichtflächen ausgebildet. Mit der über die Stege vorgenommene Schwenklagerung des Ventilglieds im Ventilgehäuse lässt sich in einfacher Weise ein von einem einzigen Ventilglied gesteuertes Doppelsitzventil mit zwei getrennten Ventileinlässen und einem gemeinsamen Ventilauslass realisieren, wobei die Ventileinlässe wechselweise mit dem Ventilauslass verbindbar sind.

Die Erfindung ist nachfolgend anhand eines in den Zeichnungen dargestellten Ausführungsbeispiels näher erläutert.

Es zeigen:
- Fig. 1: eine Explosionsdarstellung einer Vorrichtung zur Durchflussregelung eines Fluids,
- Fig. 2: einen Längsschnitt der Vorrichtung in Fig. 1,
- Fig. 3: eine Unteransicht eines Ventilglieds der Vorrichtung in Richtung Pfeil III in Fig. 2,
- Fig. 4: einen Schnitt längs der Linie IV - IV in Fig. 3.

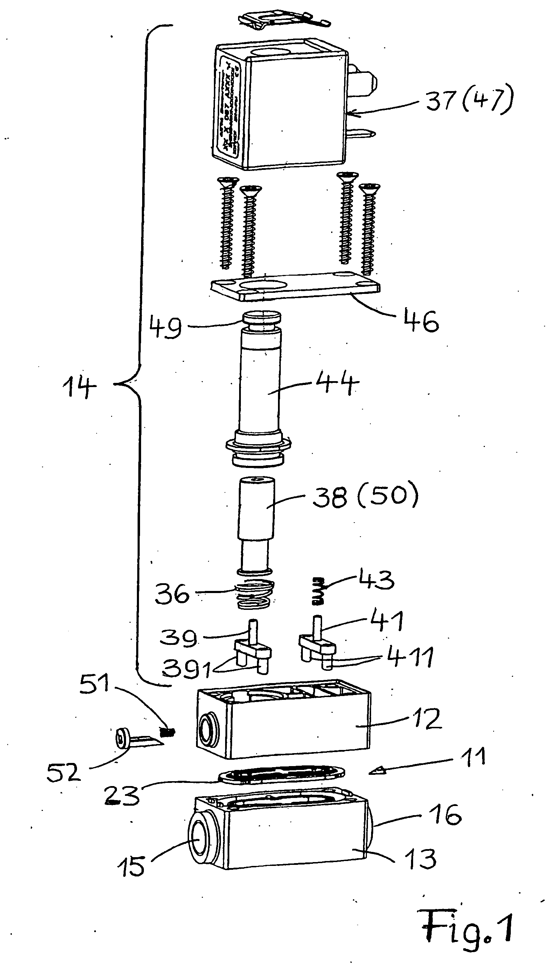

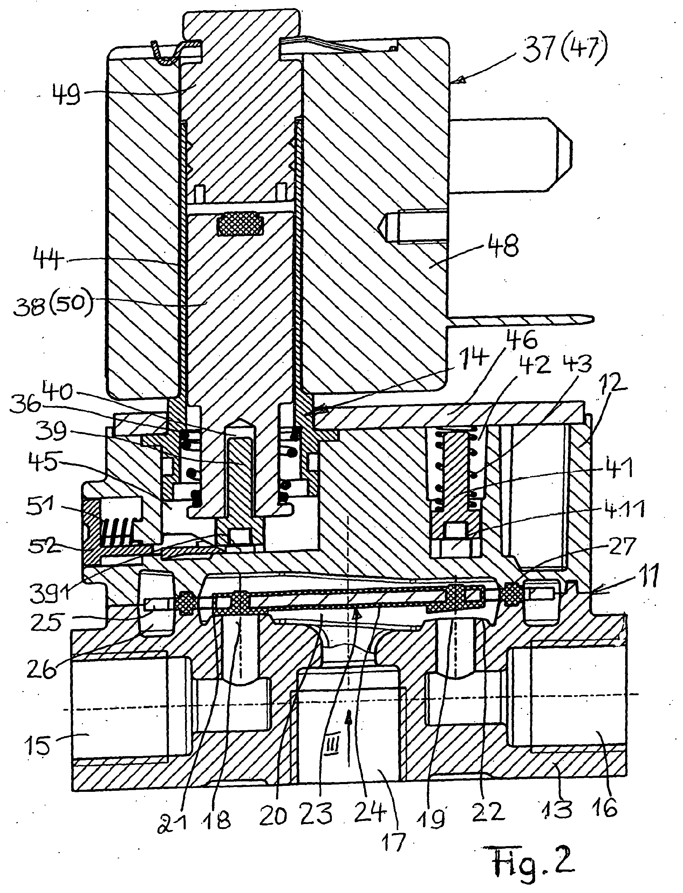

Die in Fig. 1 und 2 dargestellte Vorrichtung zur Durchflussregelung eines fluiden oder fließenden Mediums, z.B. eines flüssigen oder eines gasförmigen Mediums, weist ein zweiteiliges Ventilgehäuse 11 auf, das aus einem oberen Gehäuseteil 12 und einem unteren Gehäuseteil 13 zusammengesetzt ist. Der untere Gehäuseteil 13 ist von dem Medium durchströmt, während in dem oberen Gehäuseteil 12 eine vom Medium getrennte Betätigungsvorrichtung 14 zur Durchflussregelung des Mediums zumindest teilweise aufgenommen ist.

Im unteren Gehäuseteil 13 des Ventilgehäuses 11 sind an voneinander abgekehrten Seiten zwei Ventileinlässe 15, 16 und ein dazwischen angeordneter Ventilauslass 17 vorgesehen. Zwischen dem Ventileinlass 15 und dem Ventilauslass 17 ist eine erste Ventilöffnung 18 und zwischen dem Ventileinlass 16 und dem Ventilauslass 17 eine zweite Ventilöffnung 19 angeordnet. Die Achsen der beiden Ventilöffnungen 18, 19 sind parallel zueinander ausgerichtet. Beide Ventilöffnungen 18, 19 liegen in einer Ventilkammer 20, die an der Schnittstelle zwischen dem oberen Gehäuseteil 12 und dem unteren Gehäuseteil 13 ausgebildet ist, wobei ein oberer Teil der Ventilkammer 20 in dem oberen Gehäuseteil 12 und ein unterer Teil der Ventilkammer 20 in dem unteren Gehäuseteil 13 eingearbeitet ist. Die erste Ventilöffnung 18 ist von einem ersten Ventilsitz 21 und die zweite Ventilöffnung 19 von einem zweiten Ventilsitz 22 jeweils konzentrisch umschlossen. Die beiden Ventilöffnungen 18, 19 werden von einem einzigen Ventilglied 23 gesteuert, wobei wechselweise die eine Ventilöffnung 18 freigegeben und die andere Ventilöffnung 19 geschlossen ist. Das Ventilglied 23 wird von der Betätigungsvorrichtung 14, die nachfolgend noch näher beschrieben wird, betätigt, wobei bei inaktiver Betätigungsvorrichtung 14 das Ventilglied 23 die erste Ventilöffnung 18 schließt und die zweite Ventilöffnung 19 freigibt, wie dies in Fig. 2 dargestellt ist.

Das Ventilglied 23 weist einen in der Ventilkammer 20 angeordneten Schließkörper 24, der mit den Ventilsitzen 21, 22 zusammenwirkt, und einen vom Medium getrennten, den Schließkörper 24 mit Abstand umgebenden Rahmen 25 auf, der fest mit dem Schließkörper 24 verbunden ist. Der Rahmen 25 ist in einem die Ventilkammer 20 umgebenden Hohlraum 26 angeordnet. Der Hohlraum 26 liegt ebenfalls in der Schnittstelle zwischen den beiden Gehäuseteilen 12, 13, wobei ein oberer Teil des umlaufenden Hohlraums 26 in den oberen Gehäuseteil 12 und ein unterer Teil des Hohlraums 26 in den unteren Gehäuseteil 13 eingearbeitet ist. Die Ventilkammer 20 und der Hohlraum 26 sind durch eine zwischen den beiden Gehäuseteilen 12, 13 festgelegte, geschlossen umlaufende Dichtung 27 hermetisch voneinander getrennt. Der Schließkörper 24 weist einen flachen, kreuzförmigen Träger 28 und einen den Träger 28 umhüllenden Überzug 29, z. B. aus Kunststoff, Gummi, einem Elastomer od. dgl., auf. Der Rahmen 25 über z. B. zwei mittig am Rahmen 25 einander diametral gegenüberliegende Stege 30, 31 mit den kürzeren Kreuzarmen des Trägers 28 starr verbunden, wobei die Stege 30, 31 die Dichtung 27 quer zu deren Längserstreckung durchdringen und nach Einspannen der Dichtung 27 zwischen die beiden Gehäuseteilen 12, 13 eine Schwenklagerung für das Ventilglied 23 bilden. An den Enden der beiden längeren Kreuzarme ist im Träger 28 jeweils ein Loch 32 bzw. 33 eingebracht. Bei der Herstellung des den Träger 28 ummantelnden Überzugs 29 werden die Löcher 32, 33 mit Kunststoff gefüllt und im Bereich der Löcher 32, 33 an der den Ventilsitzen 21, 22 zugekehrten Unterseite des Überzugs 29 mit den Ventilsitzen 21, 22 zusammenwirkende Dichtflächen 34,35 ausgebildet. Die auf voneinander abgekehrten Seiten der Schwenklagerung des Ventilglieds 23 im gleichen Abstand von dieser zueinander versetzt angeordneten Ventilsitze 21, 22 sind plan ausgebildet und weisen unterschiedliche Lotabstände von der Schwenklagerung auf, wobei der Lotabstand des zweiten Ventilsitzes 22 größer ist als der des ersten Ventilsitzes 21. Unter Lotabstand wird der Abstand der Ebene, in der der plane Ventilsitz 21 bzw. 22 liegt, von der Schwenklagerung verstanden. Die mit dem ersten Ventilsitz 21 zusammenwirkende Dichtfläche 34 ist parallel zur Ebene von Rahmen 25 und Träger 28 ausgerichtet, während die Dichtfläche 35, die mit dem in Bezug auf den ersten Ventilsitz 21 zurückversetzten zweiten Ventilsitz 22 zusammenwirkt, spitzwinklig zur Ebene von Rahmen 25 und Träger 28 ausgerichtet ist. Der Anstellwinkel der Dichtfläche 35 entspricht dabei dem Schwenkwinkel des Ventilglieds 23, um den das Ventilglied 23 geschwenkt wird, um die zweite Ventilöffnung 19 zu schließen und die erste Ventilöffnung 18 freizugeben. Der Rahmen 25, der Träger 28 und die beide miteinander verbindenden Stege 30, 31 sind einteilig als Stanzschnitt aus einem Metallblech hergestellt. Der Überzug 29 wird vorteilhaft durch Umspritzen des Trägers 28 mit z. B. Kunststoff, Gummi, einem Elastomer od. dgl. hergestellt. Beim Umspritzen des Trägers 28 wird gleichzeitig auch die geschlossen umlaufende Dichtung 27, die die vom Rahmen 25 zum Träger 28 sich erstreckenden und mit dem Rahmen 25 und dem Träger 28 einstückigen Stege 30, 31 beidseitig überdeckt, aus dem gleichen Material mit hergestellt.

Selbstverständlich ist es möglich, das Ventilgehäuse 11 nur mit einem Ventileinlass, z.B. dem Ventileinlass 15, und dem Ventilauslass 17 zu versehen, wobei das Ventilglied 23 unverändert bleibt, allerdings die zweite Dichtfläche 35 entfällt.

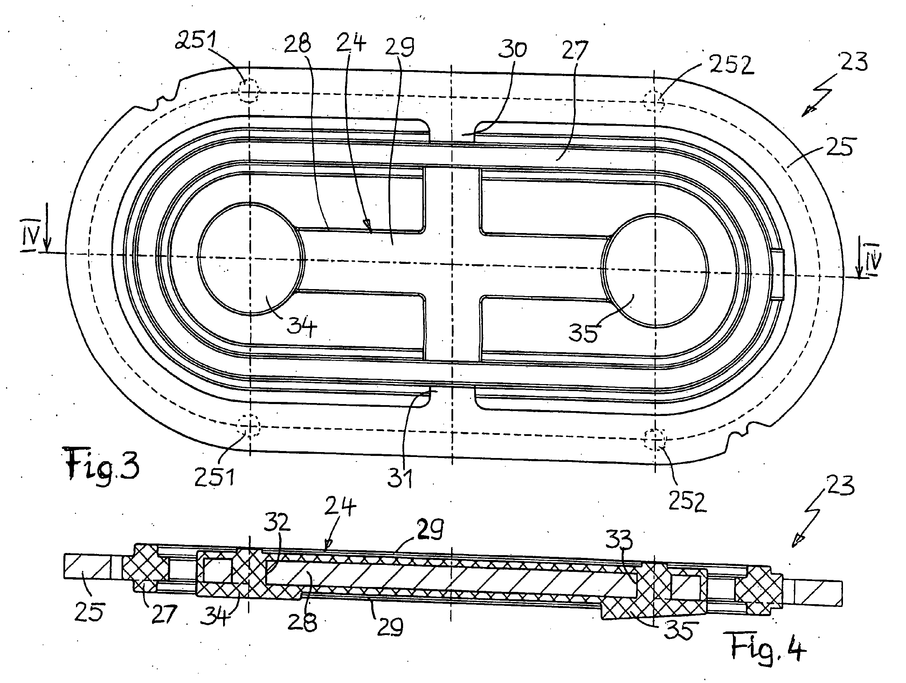

Die auf den oberen Gehäusedeckel 12 des Ventilgehäuses 11 aufgesetzte und teilweise im oberen Gehäuseteil 12 aufgenommene Ventilglied-Betätigungsvorrichtung 14 weist eine Ventilschließfeder 36 und einen Aktuator oder Aktor 37 mit einem gegen die Kraft der Ventilschließfeder 36 arbeitenden Antriebsglied 38 für das Ventilglied 23 auf. Der Aktor 37 ist auf das obere Gehäuseteil 12 aufgesetzt und taucht mit einer Führungshülse 44 für das Antriebsglied 38 in eine im oberen Gehäuseteil 12 ausgebildete Aufnahmekammer 45 ein. An der Stirnseite des Antriebsglieds 38 ist eine Druckgabel 39 mit zwei Gabelzinken 391 angeordnet. Die beiden Gabelzinken 391 liegen durch die Federkraft der an dem Antriebsglied 38 angreifenden Ventilschließfeder 36 auf zwei Stellen des Rahmens 25 auf, die an der ersten Ventilöffnung 18 einander diametral gegenüberliegen. In Fig. 3 sind lediglich zur Verdeutlichung diese beiden Stellen strichliniert auf dem Rahmen 25 dargestellt und mit 251 bezeichnet. Im dargestellten Ausführungsbeispiel ist die Druckgabel 39 lose in eine zentrale stirnseitige Ausnehmung 40 eingesetzt. Zugleich ist eine weitere Druckgabel 41 mit zwei Gabelzinken 411 (Fig. 1 und 2) in einem in den oberen Gehäuseteil 12 des Ventilgehäuses 11 eingebrachten Führungsschacht 42 axial verschieblich geführt. Die Gabelzinken 411 der weiteren Druckgabel 41 liegen ebenfalls auf dem Rahmen 25 auf, und zwar an zwei an der zweiten Ventilöffnung 19 einander gegenüberliegenden Stellen 252, und werden von einer auf den Schaft der Druckgabel 41 aufgeschobenen Druckfeder 43, die sich einerseits an der Druckgabel 41 und andererseits gehäuseseitig abstützt, auf den Rahmen 25 aufgedrückt. Die Federkraft der Druckfeder 43 ist kleiner bemessen als die Federkraft der Ventilschließfeder 36, so dass die weitere Druckgabel 41 das Ventilglied 23 mit der Dichtfläche 35 auf den zweiten Ventilsitz 22 erst dann aufzudrücken vermag, wenn durch Axialverschiebung des Antriebsglieds 38 die auf das Ventilschließglied 23 am Ort der ersten Ventilöffnung 18 wirkende Schließkraft der Ventilschließfeder 36 aufgehoben ist. Eine auf die Oberseite des oberen Gehäuseteils 12 aufgesetzte und im Ventilgehäuse 11 verschraubte Abdeckplatte 46 schließt sowohl die Aufnahmekammer 45 unter Festlegung der Führungshülse 44 als auch den Führungsschacht 42 der weiteren Druckgabel 41 ab, wobei die auf der Druckgabel 41 aufsitzende Druckfeder 43 sich an der Abdeckplatte 46 abstützt.

Ist der Aktor 37 inaktiv, so nimmt das Ventilglied 23 seine Stellung in Fig. 2 ein, bei welcher die Dichtfläche 34 von der Ventilschließfeder 36 auf den ersten Ventilsitz 21 der ersten Ventilöffnung 18 aufgepresst ist und die Dichtfläche 35 vom zweiten Ventilsitz 22 an der zweiten Ventilöffnung 19 abgehoben ist. In diesem Fall ist ein Strömungsweg von dem Ventileinlass 16 zu dem Ventilauslass 17 freigegeben und der Strömungsweg von dem Ventileinlass 15 zu dem Ventilauslass 17 gesperrt. Wird der Aktor 37 aktiviert, so verschiebt sich das Antriebsglied 38 gegen die Kraft der Ventilschließfeder 36 nach oben. Durch die Federkraft der Druckfeder 43 schwenkt die Druckgabel 41 das Ventilglied 23 um die Schwenklagerung an den Stegen 30, 31 und drückt das Ventilglied 23 mit der Dichtfläche 35 auf den zweiten Ventilsitz 22 an der zweiten Ventilöffnung 19 auf. Der Strömungsweg vom Ventileinlass 16 zum Ventilauslass 17 ist gesperrt und der Strömungsweg vom Ventileinlass 15 zum Ventilauslass 17 freigegeben.

In dem hier beschriebenen Ausführungsbeispiel ist der Aktor 37 als Elektromagnet 47 mit einer die Führungshülse 44 umgebenden Erregerspule 48, einem in die Führungshülse 44 eintauchenden Magnetkern 49 und einem in der Führungshülse 44 axial verschieblichen, das Antriebsglied 38 des Aktors 37 bildenden Anker 50 ausgeführt. Als Aktor 37 kann aber auch ein piezoelektrisch, magnetostriktiv, pneumatisch oder dergleichen arbeitender Aktor eingesetzt werden.

Bei der beschriebenen Vorrichtung zur Durchflussregelung eines flüssigen oder gasförmigen Mediums ist auch eine Handbetätigung zum Freigeben der ersten Ventilöffnung 18 bei Ausfall des Aktors 37 oder zur Inbetriebnahme der Vorrichtung ohne Hilfsenergie vorgesehen. Die Handbetätigung kann eine drehbare, rastende oder dergleichen Bewegung sein. Beim dargestellten Ausführungsbeispiel mit Schiebebetätigung weist die Handbetätigung eine gegen die Kraft einer Rückstellfeder 51 verschiebbare Schiebetaste 52 mit Schiebekeil auf. Bei Eindrücken der Schiebetaste 52 gegen die Kraft der Rückstellfeder 51 schiebt sich der Schiebekeil unter die Druckgabel 39 und hebt diese gegen die Kraft der Ventilschließfeder 36 vom Ventilglied 23 ab, so dass durch die Druckfeder 43 das Ventilglied 23 mit Freigeben der ersten Ventilöffnung 18 geschwenkt werden kann.

## Patentansprüche

1. Vorrichtung zur Durchflussregelung eines flüssigen oder gasförmigen Mediums, mit einem Ventilgehäuse (11), das mindestens einen Ventileinlass (15, 16) und einen Ventilauslass (17) sowie mindestens eine zwischen dem mindestens einen Ventileinlass (15, 16) und dem Ventilauslass (17) angeordnete, von einem Ventilsitz (21, 22) umschlossene Ventilöffnung (18, 19) aufweist, mit einem die Ventilöffnung (18, 19) steuernden Ventilglied (23) und mit einer Ventilglied-Betätigungsvorrichtung (14), die eine Ventilschließfeder (36) und einen gegen die Rückstellkraft der Ventilschließfeder (36) arbeitenden Aktor (37) aufweist, **dadurch gekennzeichnet, dass** das Ventilglied (23) einen mit dem mindestens einen Ventilsitz (21, 22) zusammenwirkenden Schließkörper (24) und einen vom Medium getrennten Rahmen (25) aufweist, der den Schließkörper (24) umgibt und mit diesem fest verbunden ist, und dass die Ventilglied-Betätigungsvorrichtung (14) an dem Rahmen (25) angreift.

2. Vorrichtung nach Anspruch 1, **dadurch gekennzeichnet, dass** der Schließkörper (24) in einer der mindestens einen Ventilöffnung (18, 19) nachgeordneten, vom Medium durchströmten Ventilkammer (20) und der Rahmen (25) in einem die Ventilkammer (20) umgebenden Hohlraum (26) angeordnet ist und dass Ventilkammer (20) und Hohlraum (26) durch eine geschlossen umlaufende Dichtung (27) voneinander getrennt sind.

3. Vorrichtung nach Anspruch 1 oder 2, **dadurch gekennzeichnet, dass** der Schließkörper (24) einen Träger (28), der mit dem Rahmen (25) über Stege (30. 31), z. B. zwei diametral verlaufende, starr verbunden ist, und einen den Träger (28) umhüllenden Überzug (29) aufweist, auf dem mindestens eine mit dem mindestens einen Ventilsitz (21, 22) zusammenwirkende Dichtfläche (24, 35) im Querabstand von den Stegen (30, 31) ausgebildet ist.

4. Vorrichtung nach Anspruch 3, **dadurch gekennzeichnet, dass** die umlaufende Dichtung (27) an den Stegen (30, 31) so festgelegt ist, dass sie von den Stegen (30, 31) quer zu ihrer Längserstreckung durchdrungen ist, und dass die Durchdringungsstellen eine Schwenklagerung für das Ventilglied (23) bilden.

5. Vorrichtung nach Anspruch 3 oder 4, **dadurch gekennzeichnet, dass** die Dichtung (27) und/oder der Überzug (29) aus Kunststoff, Gummi, einem Elastomer od. dgl., z. B. beide aus dem gleichen Material, gebildet sind.

6. Vorrichtung nach einem der Ansprüche 3 bis 5, **dadurch gekennzeichnet, dass** im Ventilgehäuse (11) ein weiterer Ventileinlass (16) und eine von einem weiteren Ventilsitz (22) umgebene weitere Ventilöffnung (19) vorhanden sind und dass auf dem Überzug (29) des Schließkörpers (24) eine mit dem weiteren Ventilsitz (22) zusammenwirkende Dichtfläche (35) ausgebildet ist, die mit Querabstand von den Stegen (30, 31) auf der von der ersten Dichtfläche (34) abgekehrten Seite des Schließkörpers (24) liegt.

7. Vorrichtung nach Anspruch 6, **dadurch gekennzeichnet, dass** die beiden beidseitig der Schwenklagerung des Ventilglieds (23), vorzugsweise im gleichen Querabstand zu dieser, angeordneten Ventilsitze (21, 22) vorzugsweise unterschiedlich große Lotabstände von der Schwenklagerung aufweisen und dass die eine Dichtfläche (34) eine parallele und die andere Dichtfläche (35) eine dem Schenkwinkel des Ventilglieds (23) entsprechende, spitzwinklige Ausrichtung zur Ebene von Rahmen (25) und Träger (28) aufweist, wobei vorzugsweise die Dichtfläche (35) mit der spitzwinkligen Ausrichtung mit dem den größeren Lotabstand aufweisenden Ventilsitz (22) zusammenwirkt.

8. Vorrichtung nach Anspruch 6 oder 7, **dadurch gekennzeichnet, dass** im Bereich einer jeden am Schließkörper (24) ausgebildeten Dichtfläche (34, 35) ein Loch (32, 33) im Träger (28) vorhanden ist, das mit Material des Überzugs (29) ausgefüllt ist.

9. Vorrichtung nach einem der Ansprüche 3 bis 8, **dadurch gekennzeichnet, dass** der vorzugsweise etwa elliptische Rahmen (25) und der vorzugsweise kreuzförmige Träger (28) sowie die den Rahmen (25) und den Träger (28) miteinander verbindenden Stege (30, 31) als einteiliger Stanzschnitt aus einem Metallblech hergestellt sind.

10. Vorrichtung nach einem der Ansprüche 1 bis 9, **dadurch gekennzeichnet, dass** das Ventilgehäuse (11) aus einem vom Medium durchströmten unteren Gehäuseteil (13) und einem die Ventilglied-Betätigungsvorrichtung (14) zumindest teilweise aufnehmenden oberen Gehäuseteil (12) zusammengesetzt ist und dass in der Schnittstelle der beiden Gehäuseteile (12, 13) die den Schließkörper (24) aufnehmende Ventilkammer (20), der den Rahmen (25) aufnehmende Hohlraum (26) und die zwischen Ventilkammer (20) und Hohlraum (26) umlaufende Dichtung (27) angeordnet sind.

11. Vorrichtung nach Anspruch 10, **dadurch gekennzeichnet, dass** die umlaufende Dichtung (27) zwischen dem oberen und unteren Gehäuseteil (12, 13) des Ventilgehäuses (11) eingespannt ist.

12. Vorrichtung nach Anspruch 10 oder 11, **dadurch gekennzeichnet, dass** die Ventilkammer (20) und der Hohlraum (26) jeweils teilweise in den oberen und unteren Gehäuseteil (12, 13) eingearbeitet sind.

13. Vorrichtung nach einem der Ansprüche 10 bis 12, **dadurch gekennzeichnet, dass** der Aktor (37) ein gegen die Kraft der Ventilschließfeder (36) verschiebbares Antriebsglied (38) aufweist, dass an der Stirnseite des Antriebsglieds (38) eine Druckgabel (39) mit zwei Gabelzinken (391) angeordnet ist und dass die beiden Gabelzinken (391) durch die Federkraft der an dem Antriebsglied (38) angreifenden Ventilschließfeder (36) auf zwei an der mindestens einen Ventilöffnung (18) einander diametral gegenüberliegenden Stellen (251) des Rahmens (25) aufliegen.

14. Vorrichtung nach Anspruch 13, **dadurch gekennzeichnet, dass** die Druckgabel (39) lose in eine stirnseitige Ausnehmung (40) im Antriebsglied (38) eingesetzt ist und dass eine weitere Druckgabel (41) mit zwei Gabelzinken (411) im oberen Gehäuseteil (12) des Ventilgehäuses (11) axial verschieblich geführt ist, die mit ihren Gabelzinken (411) auf der von der ersten Druckgabel (39) abgekehrten Seite der Schenklagerung des Ventilglieds (23) auf einander gegenüberliegenden Stellen (252) des Rahmens (25) durch eine Druckfeder (43) aufgedrückt ist, und dass die Federkraft der Druckfeder (43) kleiner bemessen ist als die Federkraft der Ventilschließfeder (36).

15. Vorrichtung nach Anspruch 14, **dadurch gekennzeichnet, dass** die Angreifstellen (252) der Gabelzinken (411) der weiteren Druckgabel (41) am Rahmen (25) einander an der weiteren Ventilöffnung (19) diametral gegenüberliegen.

16. Vorrichtung nach einem der Ansprüche 13 bis 15, **dadurch gekennzeichnet, dass** der Aktor (37) auf das obere Gehäuseteil (12) aufgesetzt ist und mit einer Führungshülse (44) für das Antriebsglied (38) in eine im oberen Gehäuseteil (12) ausgebildete Aufnahmekammer (45) eintaucht und dass die Ventilschließfeder (36) sich einerseits an der Führungshülse (44) und andererseits am Antriebsglied (38) abstützt.

17. Vorrichtung nach einem der Ansprüche 13 bis 16, **dadurch gekennzeichnet, dass** der Aktor (37) ein Elektromagnet (47) und das Antriebsglied (38) ein Anker (50) des Elektromagneten (47) ist.

## Claims

1. Device for regulating the flow of a liquid or gaseous medium, said device including a valve housing (11) which has at least one valve inlet (15, 16) and one valve outlet (17) as well as at least one valve opening (18, 19) that is located between the at least one valve inlet (15, 16) and the valve outlet (17) and is surrounded by a valve seat (21, 22), a valve member (23) controlling the valve opening (18, 19) and a valve member actuating device (14), which has a valve-closing spring (36) and an actuator (37) that operates in opposition to the restoring force of the valve closing spring (36), **characterized in that** the valve member (23) has a closing body (24), which interacts with the at least one valve seat (21, 22), and a frame (25), which is separated from the medium, surrounds the closing body (24) and is fixedly connected to said closing body, and **in that** the valve member actuating device (14) engages the frame (25).

2. Device according to Claim 1, **characterized in that** the closing body (24) is located in a valve chamber (20), which is located downstream of the at least one valve opening (18, 19) and is traversed by the medium, and the frame (25) is located in a hollow chamber (26) surrounding the valve chamber (20), and **in that** valve chamber (20) and hollow chamber (26) are separated from each other by a closed circumferential seal (27).

3. Device according to Claim 1 or 2, **characterized in that** the closing body (24) has a support (28), which is rigidly connected to the frame (25) by means of webs (30, 31), e.g. two diametrically extending webs, and a coating (29), which covers the support (28) and on which at least one sealing face (24, 35), which interacts with the at least one valve seat (21, 22), is realized at a transverse spacing from the webs (30, 31).

4. Device according to Claim 3, **characterized in that** the circumferential seal (27) is secured to the webs (30, 31) such that it is penetrated by the webs (30, 31) transversely to its longitudinal extension, and **in that** the points of penetration form a pivot bearing arrangement for the valve member (23).

5. Device according to Claim 3 or 4, **characterized in that** the seal (27) and/or the coating (29) are formed from plastics material, rubber, an elastomer or the like, e.g. both from the same material.

6. Device according to one of Claims 3 to 5, **characterized in that** in the valve housing (11) there is an additional valve inlet (16) and an additional valve opening (19) that is surrounded by an additional valve seat (22), and **in that** a sealing face (35) that interacts with the additional valve seat (22) is realized on the coating (29) of the closing body (24), said sealing face being situated on the side of the closing body (24) remote from the first sealing face (34) at a transverse spacing from the webs (30, 31).

7. Device according to Claim 6, **characterized in that** the two valve seats (21, 22), located on both sides of the pivot bearing arrangement of the valve member (23), preferably at the same transverse spacing from said pivot bearing arrangement, preferably have different-sized vertical spacings from the pivot bearing arrangement, and **in that** the one sealing face (34) has a parallel orientation and the other sealing face (35) has an acute-angled orientation, which corresponds to the pivot angle of the valve member (23), to the plane of frame (25) and support (28), wherein the sealing face (35) with the acute-angled orientation preferably interacts with the valve seat (22) with the greater vertical spacing.

8. Device according to Claim 6 or 7, **characterized in that** in the region of each sealing face (34, 35) realized on the closing body (24) there is a hole (32, 33) in the support (28) which is filled with material of the coating (29).

9. Device according to one of Claims 3 to 8, **characterized in that** the preferably approximately elliptical frame (25) and the preferably cruciform support (28) as well as the webs (30, 31) that interconnect the frame (25) and the support (28) are produced as a one-piece stamped stamping from a metal sheet.

10. Device according to one of Claims 1 to 9, **characterized in that** the valve housing (11) is assembled from a bottom housing part (13) that is traversed by the medium and a top housing part (12) that accommodates the valve member actuating device (14) at least in a partial manner, and **in that** the valve chamber (20) accommodating the closing body (24), the hollow chamber (26) accommodating the frame (25) and the circumferential seal (27) between valve chamber (20) and hollow chamber (26) are located in the interface between the two housing parts (12, 13).

11. Device according to Claim 10, **characterized in that** the circumferential seal (27) is clamped between the top and bottom housing part (12, 13) of the valve housing (11).

12. Device according to Claim 10 or 11, **characterized in that** the valve chamber (20) and the hollow chamber (26) are each machined partially into the top and bottom housing part (12, 13).

13. Device according to one of Claims 10 to 12, **characterized in that** the actuator (37) has a drive member (38) that is displaceable in opposition to the force of the valve closing spring (36), **in that** a pressure fork (39) with two fork tines (391) is located on the end face of the drive member (38), and **in that**, as a result of the spring force of the valve closing spring (36) engaging the drive member (38), the two fork tines (391) rest on two points (251) of the frame (25) that are situated diametrically opposite one another at the at least one valve opening (18).

14. Device according to Claim 13, **characterized in that** the pressure fork (39) is inserted loosely into an end face recess (40) in the drive member (38), and **in that** an additional pressure fork (41) with two fork tines (411) is guided in the top housing part (12) of the valve housing (11) so as to be axially displaceable and, by means of a compression spring (43), is pressed with its fork tines (411) on the side of the pivot bearing arrangement of the valve member (23) remote from the first pressure fork (39) at points (252) of the frame (25) located opposite each other, and **in that** the spring force of the compression spring (43) is dimensioned to be less than the spring force of the valve closing spring (36).

15. Device according to Claim 14, **characterized in that** the engagement points (252) of the fork tines (411) of the additional pressure fork (41) are situated diametrically opposite one another on the frame (25) at the additional valve opening (19).

16. Device according to one of Claims 13 to 15, **characterized in that** the actuator (37) is fitted onto the top housing part (12) and, by way of a guide sleeve (44) for the drive member (38), extends into an accommodating chamber (45) realized in the top housing part (12), and **in that** the valve closing spring (36) is supported at the one end on the guide sleeve (44) and at the other end on the drive member (38).

17. Device according to one of Claims 13 to 16, **characterized in that** the actuator (37) is an electromagnet (47) and the drive member (38) is an armature (50) of the electromagnet (47).

## Revendications

1. Dispositif destiné à la régulation du débit d'un milieu liquide ou gazeux, comprenant un boîtier de soupape (11), qui présente au moins une entrée de soupape (15, 16), et une sortie de soupape (17), ainsi qu'au moins une ouverture de soupape (18, 19) disposée entre l'au moins une entrée de soupape (15, 16) et la sortie de soupape (17), entourée par un siège de soupape (21, 22), un organe de soupape (23) commandant l'ouverture de soupape (18, 19) et un dispositif d'actionnement de l'organe de soupape (14), qui présente un ressort de fermeture de soupape (36) et un actionneur (37) fonctionnant à l'encontre de la force de rappel du ressort de fermeture de soupape (36), **caractérisé en ce que** l'organe de soupape (23) présente un corps de fermeture (24) coopérant avec l'au moins un siège de soupape (21, 22) et un cadre (25) séparé du milieu, qui entoure le corps de fermeture (24) et qui est connecté fixement à celui-ci, et **en ce que** le dispositif d'actionnement de l'organe de soupape (14) vient en prise sur le cadre (25).

2. Dispositif selon la revendication 1, **caractérisé en ce que** le corps de fermeture (24) est disposé dans une chambre de soupape (20) parcourue par le milieu, disposée en aval de l'au moins une ouverture de soupape (18, 19), et le cadre (25) est disposé dans une cavité (26) entourant la chambre de soupape (20), et **en ce que** la chambre de soupape (20) et la cavité (26) sont séparées par un joint d'étanchéité (27) périphérique fermé.

3. Dispositif selon la revendication 1 ou 2, **caractérisé en ce que** le corps de fermeture (24) présente un support (28), qui est connecté rigidement au cadre (25) par le biais de nervures (30, 31), par exemple deux nervures s'étendant diamétralement, et un revêtement (29) enveloppant le support (28), sur lequel au moins une surface d'étanchéité (24, 35) coopérant avec l'au moins un siège de soupape (21, 22) est réalisée à distance transversale des nervures (30, 31).

4. Dispositif selon la revendication 3, **caractérisé en ce que** le joint d'étanchéité périphérique (27) est fixé sur les nervures (30, 31) de telle sorte qu'il soit traversé par les nervures (30, 31) transversalement à son étendue longitudinale, et **en ce que** les points de traversée forment un support de palier pivotant pour l'organe de soupape (23).

5. Dispositif selon la revendication 3 ou 4, **caractérisé en ce que** le joint d'étanchéité (27) et/ou le revêtement (29) sont formés en plastique, en caoutchouc, en élastomère ou similaire, et par exemple en ce que tous les deux sont formés en le même matériau.

6. Dispositif selon l'une quelconque des revendications 3 à 5, **caractérisé en ce qu'**une autre entrée de soupape (16) dans le boîtier de soupape (11) et une autre ouverture de soupape (19) entourée par un autre siège de soupape (22) sont prévues, et **en ce qu'**une surface d'étanchéité (35) coopérant avec l'autre siège de soupape (22) est réalisée sur le revêtement (29) du corps de fermeture (24), et se situe à une distance transversale des nervures (30, 31) sur le côté du corps de fermeture (24) détourné de la première surface d'étanchéité (34).

7. Dispositif selon la revendication 6, **caractérisé en ce que** les deux sièges de soupape (21, 22) disposés de chaque côté du support de palier pivotant de l'organe de soupape (23), de préférence à la même distance transversale de celui-ci, présentent de préférence des distances d'aplomb au support de palier pivotant différentes, et **en ce que** l'une des surfaces d'étanchéité (34) présente une orientation par rapport au plan du cadre (25) et du support (28) parallèle et l'autre surface d'étanchéité (35) présente une orientation par rapport au plan du cadre (25) et du support (28) à angle aigu correspondant à l'angle de pivotement de l'organe de soupape (23), la surface d'étanchéité (35) avec l'orientation à angle aigu coopérant de préférence avec le siège de soupape (22) présentant la plus grande distance d'aplomb.

8. Dispositif selon la revendication 6 ou 7, **caractérisé en ce qu'**un trou (32, 33) dans le support (28) est prévu dans la région de chaque surface d'étanchéité (34, 35) réalisée sur le corps de fermeture (24), et est rempli du matériau de revêtement (29).

9. Dispositif selon l'une quelconque des revendications 3 à 8, **caractérisé en ce que** le cadre (25) de préférence approximativement elliptique et le support de préférence cruciforme (28) ainsi que les nervures (30, 31) reliant l'un à l'autre le cadre (25) et le support (28), sont fabriqués en tôle métallique comme pièce estampée d'une seule pièce.

10. Dispositif selon l'une quelconque des revendications 1 à 9, **caractérisé en ce que** le boîtier de soupape (11) est constitué d'une partie de boîtier (13) inférieure parcourue par le milieu et d'une partie de boîtier supérieure (12) recevant au moins en partie le dispositif d'actionnement (14) de l'organe de soupape, et **en ce que** la chambre de soupape (20) recevant le corps de fermeture (24), la cavité (26) recevant le cadre (25) et le joint d'étanchéité (27) périphérique entre la chambre de soupape (20) et la cavité (26) sont disposés dans l'interface des deux parties de boîtier (12, 13).

11. Dispositif selon la revendication 10, **caractérisé en ce que** le joint d'étanchéité périphérique (27) est serré entre les parties de boîtier supérieure et inférieure (12, 13) du boîtier de soupape (11).

12. Dispositif selon la revendication 10 ou 11, **caractérisé en ce que** la chambre de soupape (20) et la cavité (26) sont incorporées à chaque fois en partie dans les parties de boîtier supérieure et inférieure (12, 13).

13. Dispositif selon l'une quelconque des revendications 10 à 12, **caractérisé en ce que** l'actionneur (37) présente un organe d'entraînement (38) déplaçable à l'encontre de la force du ressort de fermeture de soupape (36), **en ce qu'**une fourche de pression (39) avec deux dents de fourche (391) est disposée sur le côté frontal de l'organe d'entraînement (38), et **en ce que** les deux dents de fourche (391) s'appliquent sous l'effet de la force de ressort du ressort de fermeture de soupape (36) venant en prise sur l'organe d'entraînement (38) sur deux endroits (251) du cadre (25) diamétralement opposés sur l'au moins une ouverture de soupape (18).

14. Dispositif selon la revendication 13, **caractérisé en ce que** la fourche de pression (39) est insérée lâchement dans un évidement frontal (40) dans l'organe d'entraînement (38), et **en ce qu'**une autre fourche de pression (41) avec deux dents de fourche (411) est guidée de manière déplaçable axialement dans la partie de boîtier supérieure (12) du boîtier de soupape (11), laquelle est pressée par un ressort de pression (43) avec ses dents de fourche (411) sur le côté du support de palier pivotant de l'organe de soupape (23) détourné de la première fourche de pression (39) sur des endroits opposés (252) du cadre (25), et **en ce que** la force de ressort du ressort de pression (43) est dimensionnée de manière à être plus petite que la force de ressort du ressort de fermeture de soupape (36).

15. Dispositif selon la revendication 14, **caractérisé en ce que** les points d'action (252) des dents de fourche (411) de l'autre fourche de pression (41) sur le cadre (25) sont diamétralement opposés l'un à l'autre sur l'autre ouverture de soupape (19).

16. Dispositif selon l'une quelconque des revendications 13 à 15, **caractérisé en ce que** l'actionneur (37) est posé sur la partie de boîtier supérieure (12) et plonge avec un manchon de guidage (44) pour l'organe d'entraînement (38) dans une chambre de réception (45) réalisée dans la partie de boîtier supérieure (12), et **en ce que** le ressort de fermeture de soupape (36) s'appuie d'une part sur le manchon de guidage (44) et d'autre part sur l'organe d'entraînement (38).

17. Dispositif selon l'une quelconque des revendications 13 à 16, **caractérisé en ce que** l'actionneur (37) est un électroaimant (47) et l'organe d'entraînement (38) est un induit (50) de l'électroaimant (47).
